# EUROPEAN PATENT SPECIFICATION

(11) **EP 3 106 337 B1**
(45) Date of publication and mention of the grant of the patent: **06.06.2018**
(21) Application number: 15202784.3
(22) Date of filing: 28.12.2015
(51) Int. Cl.: B60K 6/36, B60K 6/365, B60K 6/48, B60K 6/547, F16H 3/72, F16H 3/00, B60W 10/02, B60W 10/06, B60W 10/08, B60W 10/113

(54) **MULTI-SPEED TRANSMISSION**
MEHRGANGGETRIEBE
TRANSMISSION A PLUSIEURS VITESSES

(30) Priority: 15.06.2015 EP 15172154
(43) Date of publication of application: 21.12.2016
(73) Proprietor: AVL List GmbH, 8020 Graz (AT)
(72) Inventor: DAVYDOV, Vitaly, 8020 Graz (AT); NISSEN, Peter-Jürgen, 8045 Graz (AT)
(74) Representative: Babeluk, Michael

(56) References cited:
- EP-A1- 2 161 154
- DE-A1-102010 046 766
- US-A1- 2010 173 746
- US-A1- 2011 111 910

## Description

The invention relates to a multi-speed transmission, especially for a vehicle, comprising an input shaft, a first driveshaft, a second driveshaft, a driven shaft, an electric machine with a rotor, a planetary gearset with three links, first of said links being constantly connected to the first driveshaft, and to the input shaft with a first controllable clutch, a second of said links being connected to the second driveshaft, and a third of said links being kinematically connected to the rotor of said electric machine, wherein a first gearing for shifting a first and second speed, a second gearing for shifting a third speed, a third gearing for shifting fourth and fifth speed; a second controllable clutch for kinematic connection of the first driveshaft with the driven shaft by the second gearing, a third controllable clutch and a fourth controllable clutch for kinematic connection of the second driveshaft with the driven shaft by the first and third gearings respectively with different gear ratios, and a fifth controllable lock-up clutch for direct connection between first and second driveshafts, wherein a first gear ratio i_{G12} between meshing gearwheels of the first gearing with one of said gearwheels arranged on the second driveshaft has a defined value.

The document DE 10 2010 046 766 A1 discloses a multi-speed according to the preamble of claim 1, with an input shaft, a first driveshaft and a second driveshaft, a driven shaft, an electric machine and a planetary set with three links. The first link of the planetary set is constantly connected to the first driveshaft and can be connected to the input shaft with a first clutch. The second link of the planetary set is connected to the second driveshaft and the third link is connected to the rotor of the electric machine. The transmission comprises a first gearing for shifting a first and second speed, a second gearing for shifting third speed and a third gearing for shifting fourth and fifth speed. The first driveshaft can be connected to the driven shaft with a second clutch. The transmission further comprises third and fourth controllable clutches for connection of the second driveshaft with the driven shaft bay first and third gearings and a controllable lock-up clutch for direct connection between first and second driveshafts.

The document US 8,784,245 B2 describes a multi-speed transmission, especially for a vehicle, comprising an input shaft and two concentric driveshafts with plurality of gears on them. At least one driven shaft with a plurality of gears on it meshes with the gears on the, wherein the gears are engageable to said shafts with clutches, forming a powerflow from said driveshafts to the driven shafts with different ratios. A controllable lock-up clutch is arranged between two gears on said driveshafts, connecting said driving shafts with each other. A rotating electric machine is connected to a battery via a control system. An output shaft is arranged coaxial to said driveshafts and meshes constantly with the driven shafts via gearing. The output shaft is directly engageable to one of the driveshafts via a clutch. The transmission further comprises a planetary gearset with three links, wherein a first of said links is connected to the first driveshaft and the input shaft, a second link is connected to the second driveshaft, and a third link is kinematically connected to the rotor of said electric machine. The rotor of the electric machine is arranged coaxially to the driveshafts. The main disadvantage of this multi speed transmission is mechanical complexity.

The U.S. patent No. 8,585,522 discloses a drive train with a combustion engine, an electric machine, and a transmission with first and second partial transmissions. The electric machine is coupled via a planetary transmission to input shafts of the first and second partial transmissions. The combustion engine can be coupled, via a separation clutch, to the input shaft of the second partial transmission and, when the separation clutch is engaged, the engine is also connected, via the planetary transmission, to the input shaft of the first partial transmission. A bridging shift element interacts with the planetary transmission such that, when the bridging shift element is engaged, the electric machine and the input shafts of the first and second partial transmissions are torsionally fixed so that they all rotate together. When the bridging shift element is disengaged, there is no torsionally fixed connection and those component rotate at different rotational speeds. The disadvantage of this drive train is that parallel arrangement of the partial transmissions is characterized with power losses in additional gearing (two gear meshes are involved in the powerflow in series).

It is the object of the present invention to avoid these disadvantages and to provide a compact and low cost multi-speed transmission with low power losses.

According to the present invention this is achieved in that
a speed ratio i_{PGS} between the second link and the third link for stopped first link has a defined value: i_{PGS} <0;
a second gear ratio i_{G3} between meshing gearwheels of the second gearing with one of said gearwheels arranged on the first driveshaft matches the inequality i_{G3} < i_{G12}/(1-(1/i_{PGS}));
a third gear ratio i_{G45} between meshing gearwheels of the third gearing matches the inequality i_{G45} < i_{G3}.

Preferably the speed ratios of said kinematic connections are assigned in a way that:
the first speed with highest speed ratio from the first driveshaft to the driven shaft is provided by simultaneous engagement of the third and fifth clutches;
the second speed with a speed ratio from the first driveshaft to the driven shaft, smaller than on the first speed, is provided by engagement of the third clutch and electrical lock of the electric machine rotor;
the third speed with the second gear ratio from the first driveshaft to the driven shaft, smaller than on the second speed, is provided by engagement of the second clutch;
the fourth speed with a speed ratio from the first driveshaft to the driven shaft, smaller than on the third speed, is provided by simultaneous engagement of the fourth and fifth clutches and
the fifth speed with a speed ratio from the first driveshaft to the driven shaft, smaller than on the fourth speed, is provided by engagement of the fourth clutch and electrical lock of the electric machine rotor.

The benefit of this arrangement is that a 3-speed geartrain with input power split device provides five speeds with different ratios. Therefore costs, complexity, mounting length, weight and drag losses can be reduced. The reduced number of shifting elements ensures a flexible shifting pattern.

According to a particular low-cost embodiment of the invention the first link of the planetary gearset is a planet carrier, the second link is a ring gear, and the third link is a sun gear.

The second driveshaft may be mounted internally through the first driveshaft. This embodiment allows to enable higher speed ratios of the 1st/2nd speeds by smaller possible diameter of the pinion, and to make possible the direct connection of the second driveshaft with the transmission output shaft.

According to a transverse embodiment of the invention with integrated final drive or a longitudinal arrangement with 3-shaft layout the transmission further comprises first output shaft with a gear on it, constantly meshing with a pinion, fixed on the driven shaft.

According to a 2-shaft variation with a drop-shaft longitudinal or transverse arrangement in the vehicle the first driveshaft comprises one gearwheel, meshing with a gearwheel on the driven shaft, and the second driveshaft comprises two gearwheels, meshing with corresponding gearwheels on the driven shaft, wherein one gearwheel in each said gearwheel meshing is constantly connected to corresponding shaft, and another gearwheel in said gearwheel meshing is engageable to corresponding shaft by corresponding second, third or fourth clutch.

According to a preferred embodiment of the invention the first driveshaft comprises one gearwheel, meshing with the gearwheel on the driven shaft, and the second driveshaft comprises one gearwheel, meshing with corresponding gearwheel on the driven shaft, wherein one gearwheel in each said gearwheel meshing is constantly connected to corresponding shaft, another gearwheel in said gearwheel meshing is engageable to corresponding shaft by corresponding second or third clutch, and the second driveshaft is directly engageable to the first output shaft by fourth clutch. This enables a 3-shaft variation with direct gear. A direct
connection to the first output shaft at 4th and 5th speeds improves the efficiency and NVH (Noise, Vibration and Harshness) performance of the transmission.

According to another embodiment of the invention the multi-speed transmission further comprises a second output shaft, wherein the first output shaft is engageable to the first driving axle of the vehicle, and the second output shaft is kinematically connected to the driven shaft and is engageable to the second driving axle of the vehicle. This embodiment enables an all-wheel-drive variation with power take-off to the front wheels from the driven shaft. A parallel arrangement of the driven shaft enables direct power take-off to the front wheels without additional gearing in transfer case.

In order to improve the NVH performance and the shifting quality of the transmission a vibration-damping device (e.g. a dual mass-flywheel) may be arranged on the input shaft. The damping device further reduce loads in the dog clutches during shifting.

According to a low-cost variation the first clutch is embodied as dry friction clutch. This embodiment may be used in combination with other clutches embodied as dog clutches with single shifting drum. Alternatively the first clutch may be embodied as wet friction clutch.

According to another low-cost and compact embodiment of the invention at least one of the clutches are dog clutches.

Reduced electric power to synchronize the shafts during 1/2 - 4/5 gear preselection on the second driveshaft may be achieved with at least one of the clutches being designed as dog clutch synchronizer.

According to a very compact and cost saving and weight saving embodiment of the invention the third clutch and the fourth clutch are embodied as dog clutches and share a common shifting sleeve. Alternatively the second and fifth clutches are embodied as dog clutches and share common shifting sleeve.

According to another cost saving embodiment of the invention the clutches are engaged by single electrically driven shifting drum. A single shifting drum is a low-cost solution for a shifting system with dog clutches. All practically required shift combinations are possible just with one intermediate shift.

The transmission may comprise a park brake device, which locks the driven shafts to a housing of the transmission. The park brake device on the shaft is constantly kinematically connected with at least one driving axle of the vehicle.

Preferably the rotor of the electric machine is connected to the third link of the planetary gearset via cylindrical geartrain, and the axis of the rotor is placed apart from the axis of the input shaft. A smaller inertia of the rotor reduces duration and/or motor shaft power for gear preselection and shifting. Further direct rotor oil cooling is enabled. The costs and weight of the electric machine can be reduced. The arrangement enables flexible gear ratio from sun gear to the rotor. Further advantages are that a shorter axial package may be realized and that there is more radial space for shaft output to the front wheels.

Alternatively the rotor of the electric machine may be directly connected to the third link of the planetary gearset, wherein the rotor is arranged coaxial to the first and second driveshafts. In this way backlash, mechanical losses and costs of the geartrain can be reduced and a smaller radial package of the transmission can be realized.

The electric machine is an induction machine with squirrel-cage rotor, a synchronous permanent magnet machine or a hysteresis machine.

Preferably the electric machine is embodied as multi-phase induction machine with squirrel-caged rotor. The induction machine is a simple and reliable contactless electric machine. The squirrel-caged rotor gives opportunity for internal power dissipation by slip, without overloading the control system, e.g. a multi-phase bridge inverter, which is connected to the stator coils. An induction machine with squirrel-caged rotor allows to dissipate large fraction of the shaft power during braking. This fraction of power does not circulate in the stator windings. That makes it possible to downsize the inverter and the electric machine for all presented embodiments except for 5-speed full hybrid.

Another possible embodiment of the electric machine is hysteresis synchronous machine with multi-phase stator and rotor with the core of semi-hard magnetic material, e.g. Alnico alloy. This machine operates as known permanent magnet machine at limited loads. During braking this electric machine may work in hysteresis asynchronous mode, when the stator electromagnetic field rotates slower than the rotor, thus reducing back-EMF and generated electric power. The rest of the brake power is dissipated by slip, and the torque is defined by the stator current and hysteresis loop of the rotor core material.

Further the rotor of the electric machine may comprise at least one cooling passage for liquid cooling of the squirrel cage or magnetic core. Forced liquid cooling is necessary for heavy modes like hill launch or repetitive launch in heavy traffic. Direct oil cooling enables mild hybrid configurations with limited capacity of the inverter and/or the battery. High fraction of shaft power of the electric machine can be dissipated as heat in rotor squirrel cage or magnetic core during passive torque fill ECVT (electronically controlled continuously variable transmission)-modes.

The invention is explained below in closer detail by reference to the drawings, wherein:
- Fig. 1: is a schematic illustration of a 5-speed full hybrid transmission in a transverse arrangement with four dog clutches and one dry separation clutch in accordance with a first embodiment of the invention;
- Fig. 2: is a schematic illustration of a 5-speed full hybrid transmission in a longitudinal arrangement with four dog clutches and one dry separation clutch in accordance with a second embodiment of the invention;
- Fig. 3: schematically shows a shift pattern of the 5-speed transmission embodiment in accordance with the first or second embodiment of the invention;
- Fig. 4: is a schematic illustration of a 5-speed full hybrid transmission in a transverse arrangement with three dog clutches and two wet clutches in accordance with a third embodiment of the invention;
- Fig. 5: is a schematic illustration of a 5-speed full hybrid transmission in a longitudinal arrangement with three dog clutches and two wet clutches in accordance with a fourth embodiment of the invention;
- Fig. 6: is a schematic illustration of a 5-speed full hybrid transmission in a transverse arrangement with two dog clutches and three wet clutches in accordance with a fifth embodiment of the invention;
- Fig. 7: is a schematic illustration of a 5-speed full hybrid transmission in a longitudinal arrangement with two dog clutches and three wet clutches in accordance with a sixth embodiment of the invention;
- Fig. 8: schematically shows a shift pattern of the 5-speed transmission embodiment in accordance with one of the embodiments three to six of the invention shown in Fig. 4 to 7;
- Fig. 9: is a schematic illustration of a 5-speed full hybrid transmission in a transverse arrangement with three dog clutches and two wet clutches in accordance with a seventh embodiment of the invention;
- Fig. 10: is a schematic illustration of a 5-speed full hybrid transmission in a longitudinal arrangement with three dog clutches and two wet clutches in accordance with a eighth embodiment of the invention;
- Fig. 11: schematically shows a shift pattern of the 5-speed transmission embodiment in accordance with the seventh or eighth embodiment;
- Fig. 12: is a schematic illustration of a 5-speed full hybrid transmission in a transverse arrangement with two dog clutches and three wet clutches in accordance with a ninth embodiment of the invention;
- Fig. 13: is a schematic illustration of a 5-speed full hybrid transmission in a longitudinal arrangement with two dog clutches and three wet clutches in accordance with a tenth embodiment of the invention;
- Fig. 14: is a schematic illustration of a 5-speed full hybrid transmission in a transverse arrangement with one dog clutch and four wet clutches in accordance with a eleventh embodiment of the invention;
- Fig. 15: is a schematic illustration of a 5-speed full hybrid transmission in a longitudinal arrangement with one dog clutch and four wet clutches in accordance with a twelfth embodiment of the invention;
- Fig. 16: schematically shows a shift pattern of the 5-speed transmission embodiment in accordance with one of the embodiments nine to twelve of the invention shown in Fig. 12 to 15;
- Fig. 17: is a schematic illustration of a 5-speed mild hybrid transmission in a transverse arrangement with four dog clutches and one dry separation clutch in accordance with a thirteenth embodiment of the invention;
- Fig. 18: is a schematic illustration of a 5-speed mild hybrid transmission in a longitudinal arrangement with four dog clutches, one dry separation clutch and a rotor of the electric machine being arranged parallel to the first and second driveshafts, in accordance with a fourteenth embodiment of the invention;
- Fig. 19: is a schematic illustration of a 5-speed mild hybrid transmission in a longitudinal arrangement with four dog clutches, one dry separation clutch and a rotor of the electric machine being arranged concentric to the first and second driveshafts, in accordance with a fifteenth embodiment of the invention;
- Fig. 20: shows a wheel torque chart example at active torque-filled shift 2 → 3 of the first embodiment of the invention (full hybrid);
- Fig. 21: shows a rotational speed chart example at active torque-filled shift 2 → 3 of the first embodiment of the invention (full hybrid);
- Fig. 22: shows a power chart example at active torque-filled shift 2 → 3 of the first embodiment of the invention (full hybrid);
- Fig. 23: shows a wheel torque chart example at active torque-filled shift 2 → 3 of the thirteenth embodiment of the invention (mild hybrid);
- Fig. 24: shows a rotational speed chart example at active torque-filled shift 2 → 3 of the thirteenth embodiment of the invention (mild hybrid);
- Fig. 25: shows a power chart example at active torque-filled shift 2 → 3 of the thirteenth embodiment of the invention (mild hybrid);
- Fig. 26: shows a wheel torque chart example at passive torque-filled shift 3 → 4 of the thirteenth embodiment of the invention (mild hybrid);
- Fig. 27: shows a rotational speed chart example at passive torque-filled shift 3 → 4 of the first or thirteenth embodiment of the invention;
- Fig. 28: shows a power chart example at passive torque-filled shift 3 → 4 of the first or thirteenth embodiment of the invention;
- Fig. 29: shows a power flow chart example for torque filled shifts at wide open throttle of the first embodiment,
- Fig. 30: shows a rotational speed chart example for torque filled shifts at wide open throttle of the first embodiment,
- Fig. 31: is a development view of the lead grooves on a single shifting drum for guiding shift fork pins of the C1 and C2 clutches, in accordance with the first embodiment of the invention and
- Fig. 32: is a development view of the lead grooves on a single shifting drum for guiding shift fork pins of the C1L, C1R and C2 clutches, in accordance with the second embodiment of the invention.

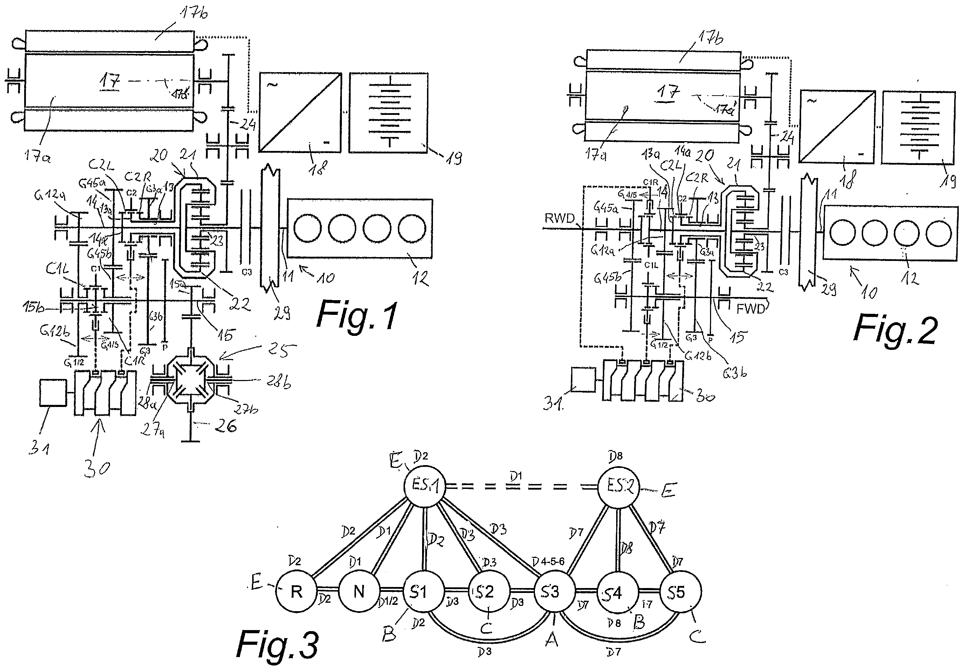

Fig. 1 to 19 each refer to a 5-speed hybrid transmission 10 with at least mild hybrid capability for a vehicle comprising an input shaft 11 attached to a prime mover 12, for example a combustion engine, a first driveshaft 13 and a second driveshaft 14, wherein the driveshafts 13, 14 are arranged concentrically. In the embodiments the second driveshaft 14 is mounted internally through the first driveshaft 13.

Each of the embodiments shown in Fig. 1, 2, 4 to 7, 9, 10, 12 to 15 and 17 to 19 comprise a transmission 10 having a first gearing G1/2 for shifting a first S1 and second speed S2, a second gearing G3 for shifting a third speed S3, a third gearing G4/5 for shifting fourth S4 and fifth speed S5.

The transmission 10 comprises an electric machine 17, e.g., a multi-phase induction machine or hysteresis machine with a rotor 17a and a stator 17b, wherein the windings of the stator 17b are connected to a multi-phase bidirectional AC power inverter 18 and a battery 19 via fixed electrical connection.

The embodiments in Fig. 1 to 16 show full hybrid/plug-in hybrid transmissions 10 with an induction electric machine or permanent magnet synchronous machine. The arrangements provide unlimited active torque fill capacity. An unlimited passive torque fill capacity is gained by large battery charging power. These inverter 18 is designed to handle more than 30% of rated power of the prime mover 12 and is preferred for 100% torque fill capacity at active torque filled shifts. A high voltage system, e.g. with a high voltage lithium battery, is preferred.

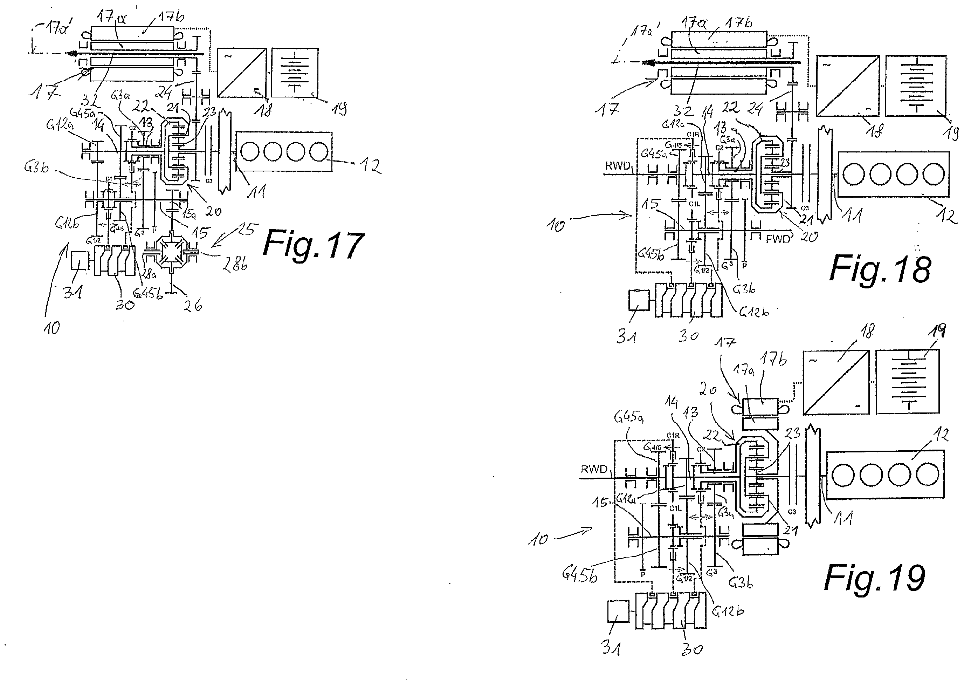

The embodiments in Fig. 17 to 18 show mild hybrid transmissions 10 with an induction electric machine with squirrel cage or hysteresis machine and oil cooled rotor. These arrangements provide limited active torque fill capacity. An unlimited passive torque fill capacity is gained by oil cooled rotor and increased rotor slip in generating mode. The rotor 17a may comprise means for forced cooling, e.g. at least one cooling channel 32 for liquid cooling. The inverter 18 is designed to handle 20..30% of rated power of the prime mover 12 and is preferred for ∼70% torque fill capacity at both active and passive torque filled shifts. A 48 voltage system, e.g. with a 48V lithium or supercap battery, is preferred.

The transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, the third link 23, e.g. a sun gear, is cinematically connected to the rotor 17a of the electric machine 17. A speed ratio between the second link 22 and the third link 23 is negative for stopped first link 21. The first link 21 is constantly connected to the first driveshaft 13. Further the first link can be connected to the input shaft 11 via a first controllable clutch C3.

A speed ratio i_{PGS} between the second link 22 and the third link 23 for stopped first link 21 has a defined value: i_{PGS} <0. A first gear ratio i_{G12} of the first gearing G1/2 on the second driveshaft 14 has a defined value, too. A second gear ratio i_{G3} of the second gearing G3 on the first driveshaft 13 matches the inequality i_{G3} < i_{G12}/(1-(1/i_{PGS})). A third gear ratio i_{G45} of the third gearing G4/5 matches the inequality i_{G45} < i_{G3}.

In embodiments shown in Fig. 1, 2, 4 to 7, 9, 10, 12 to 15, 17 and 18 the third link 23 is cinematically connected to the rotor 17a of the electric machine 17 via a cylindrical geartrain 24, and the axis 17a' of the rotor 17a is placed apart from the axis of the input shaft 11. The advantages of these embodiments are as follows:
- Small inertia of the rotor reduces duration and/or motor shaft power for gear preselection and shifting;
- Direct rotor oil cooling is enabled;
- Low cost and weight of the electric machine;
- Flexible gear ratio from sun gear to the rotor;
- More radial space for shaft output to the front wheels.

Fig. 19 show an alternative arrangement of the electric machine 17 with a directly connected concentric shaft, wherein the rotor 17a of the electric machine 17 is directly connected to the third link 23 of the planetary gear 20. This embodiment reduces geartrain backlash, mechanical losses and costs of the geartrain and enables smaller radial package of the transmission.

The first driveshaft 13 comprises a driving gearwheel G3a for 3^{rd} speed S3, meshing with a corresponding driven gearwheel G3b of the driven shaft 15. The second driveshaft 14 has driving gearwheels G12a and G45a, for 1^{st}/2^{nd} and 4^{th}/5^{th} speeds S1, S2, S4, S5, meshing with corresponding driven gearwheels G12b and G45b of a driven shaft 15.

The gearwheels G12a, G3a, G45a; G12b, G3b, G45b for forward speeds S1, S2, S3, S4, S5 are engageable to said shafts 13, 14; 15 with clutches C2R, C1L, C1R, C2L forming a power flow from the driveshafts 13, 14 to the driven shaft 15 with different ratios. A second controllable clutch C2R is designed for kinematic connection of the first driveshaft 13 with the driven shaft 15. A third controllable clutch C1L and a fourth controllable clutch C1R are designed for kinematic connection of the second driveshaft 14 with the driven shaft 15 with two different gear ratios, and a fifth controllable lock-up clutch C2L is constructed for direct connection between first 13 and second driveshafts 14.

A first speed S1 with highest gear ratio from the first driveshaft 13 to the driven shaft 15 is provided by simultaneous engagement of the third clutch C1L and fifth clutch C2L. A second speed S2 with gear ratio from the first driveshaft 13 to the driven shaft 15, smaller than on the first speed G1, is provided by engagement of the third clutch C1L and an electrical lock of the electric machine rotor 17a. A third speed S3 with gear ratio from the first driveshaft 13 to the driven shaft 15, smaller than on the second speed S2, is provided by engagement of the second clutch C2R; A fourth speed S4 with gear ratio from the first driveshaft 13 to the driven shaft 15, smaller than on the third speed S3, is provided by simultaneous engagement of the fourth clutch C1R and fifth clutch C2L. A fifth speed S5 with gear ratio from the first driveshaft 13 to the driven shaft 15, smaller than on the fourth speed S4, is provided by engagement of the fourth clutch C1R and electrical lock of the electric machine rotor 17a.

In all embodiments at least one of the clutches C2R, C1L, C1R and C2L may be designed as simple dog clutches or as dog clutches with synchronizers.

A vibration-damping device 29 (e.g. dual-mass flywheel) may be arranged on the input shaft 11.

The transmission 10 may optionally comprise park ratchet wheel P, rigidly mounted on the driven shaft 15.

Each of the embodiments shown in Fig. 1, 6, 9, 12, 14 and 17 the first driveshaft 13 comprises one gearwheel G3a, meshing with a gearwheel G3b on the driven shaft 15, and the second driveshaft 14 comprises two gearwheels G12a, G45a, meshing with corresponding gearwheels G12b, G45b on the driven shaft 15, wherein one gearwheel in each said gear meshing is constantly connected to corresponding shaft, and another gearwheel in said gear meshing is engageable to corresponding shaft by the corresponding second, third or fourth clutch C2R, C1L, C1R. A gearwheel 26 of a differential 25 constantly meshes with a pinion 15a on the driven shaft 15. Driven links 27a, 27b of the differential 25 are connected to output shafts 28a, 28b of the transmission 10. The axis of the gearwheel 26 may be arranged parallel or not parallel to the axis of the input shaft 11. The gearing 15a, 26 may be embodied as cylindrical or bevel, respectively.

Each of the embodiments show in Fig. 2, 5, 7, 10, 13, 15 and 18 the first driveshaft 13 comprises one gearwheel G3a, meshing with the gearwheel G3b on the driven shaft 15, and the second driveshaft 14 comprises one gearwheel G12a, meshing with corresponding gearwheel G12b on the driven shaft 15. One gearwheel in each said gear meshing is constantly connected to corresponding shaft, another gearwheel in said gear meshing is engageable to corresponding shaft by corresponding second or third clutch C2R, C1L. The second driveshaft 14 is directly engageable to a first output shaft RWD by the fourth clutch C1R. The first output shaft RWD is engageable to a first driving axle of the vehicle. The transmission in each of these embodiments further comprises a second output shaft FWD. The second output shaft RWD is kinematically connected to the driven shaft 15 and is engageable to a second driving axle of the vehicle.

In the first embodiment shown in Fig. 1 the third clutch C1L and the fifth clutch C1R are formed by a first double acting shifting clutch C1. In Fig.1 and Fig. 2 the second clutch C2R and the fourth clutch C2L are formed by a second double acting shifting clutch C2.

The first double acting shifting clutch C1 is embodied in a way that it can alternatively connect two loose gearwheels G12b, G45b to the output shaft 15, wherein said gearwheels G12b, G45b are arranged on opposite sides of a spline 15b which is rotationally fixed to the output shaft 15.

The second double acting shifting clutch C2 is embodied in a way that it can alternatively connect the first drive shaft 13 to the second drive shaft 14 via splines 13a, 14a or to the output shaft 15 via spline 13a and gear wheel G3a, wherein said spline 14a and gearwheel G3ab are arranged on opposite sides of spline 13a which is rotationally fixed to the first drive shaft 13.

The double acting shifting clutches C1, C2 are engaged by a single shifting drum 30, which is electrically driven by a motor 31.

The first embodiment of the transmission 10 shown in Fig. 1 comprises five prime mover based speeds S1, S2, S3, S4, S5 (at least 70% torque filled shifts), two electric speeds ES1, ES2, associated to 1^{st} and 4^{th} prime mover based speeds S1, S4 (torque interrupted shifts), and two electronically controlled continuously variable transmission modes ECVT1, ECVT2. Electric boost is enabled at 1^{st}, 2^{nd} and 4^{th} gears S1, S2, S4. The first controllable clutch C3 is designed as dry friction clutch. The second C2R, third C1L, fourth C1R and fifth controllable clutches C2L are formed by dog clutches.

The first embodiment enables a 9-mode powertrain in a transverse arrangement with operating conditions as follows:

| **Speed** | **C1** | | **C2** | | **C3** | **Drum 30 position** | **Torque fill at WOT** | **Electric Machine 17 Mode** |
|---|---|---|---|---|---|---|---|---|
| | **C1L** | **C1R** | **C2L** | **C2R** | | | | |
| Battery charging / engine cranking | | | X | | X | D1 | | Power generating / driving |
| Moving-off on E-gear EG1 | X | | X | | | D2 | | Driving |
| Moving-off on ICE G1 | X | | X | | X | D2 | | Driving |
| Moving-off on ECVT1 | X | | | | X | D3 | | Power generation |
| S1 / boost | X | | X | | X | D2 | | Power generation / driving |
| S1-S2 shift / ECVT1 | X | | | | X | D3 | 100% (passive) | Braking |
| S2 | X | | | | X | D3 | | Power generation (small speed) |
| S2-S3 shift /ECVT1 | X | | | | X | D3 | 100% (active) | Driving |
| S3, preselected G1/2 | X | | | X | X | D4 | | Power generation |
| S3, doing preselection | | | | X | X | D5 | | Shaft speed synchronization |
| S3, preselected G4/5 | | X | | X | X | D6 | | Power generation |
| S3-S4 shift /ECVT2 | | X | | | X | D7 | 70% (passive) | Braking / power generation |
| G4 /boost | | X | X | | X | D8 | | Power generation / driving |
| S4-S5 shift / ECVT2 | | X | | | X | D7 | 70% (passive) | Braking / power generation |
| S5 | | X | | | X | D7 | | Power generation (small speed) |
| EG1 / cranking | X | | X | | -/X | D2 | | Driving |
| Shifting ES1 - ES2 | | | X | | | D1 | 0% | Shaft speed synchronization |
| ES2 / cranking | | X | X | | -/X | D8 | | Driving |

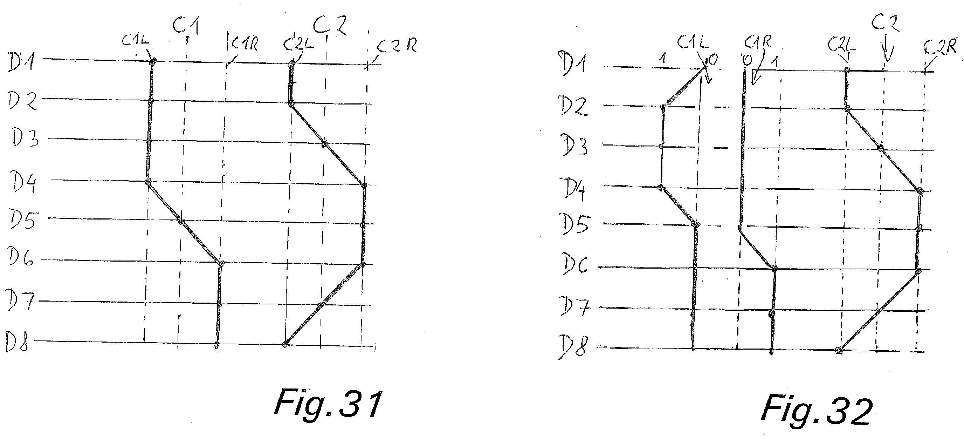

The references D1 to D8 indicate angular positions of the drum 30 (see Fig. 31). The column "Torque fill at WOT" shows the Torque fill by electric machine 17 at engine's maximum intake of air and fuel (WOT=wide open throttle).

The second embodiment of the transmission 10 shown in Fig. 2 comprises five prime mover based speeds S1, S2, S3, S4, S5 (at least 70% torque filled shifts), two electric gears ES1, ES2, associated to 1^{st} and 4^{th} prime mover based speeds S1, S4 (torque interrupted shifts), and two electronically controlled continuously variable transmission modes ECVT1, ECVT2. Electric boost is enabled at 1^{st}, 2^{nd} and 4^{th} speeds S1, S2, S4. The 4^{th} speed S4 is designed as direct prime mover speed. The 5^{th} gear S5 is formed as overdrive gear with improved efficiency (no cylindrical gears engaged). The first controllable clutch C3 is designed as dry friction clutch. The second C2R, third C1L, fourth C1R and fifth controllable clutches C2L are formed by dog clutches.

The second embodiment enables a 9-mode powertrain in a longitudinal arrangement with operating conditions as follows:

| **Speed** | **C1L** | **C1R** | **C2** | | **C3** | **Drum 30** | **Torque fill at WOT** | **Electric Machine** |
|---|---|---|---|---|---|---|---|---|
| | | | **C2L** | **C2R** | | **position** | | **17 Mode** |
| Battery charging / engine cranking | | | X | | X | D1 | | Power generating / driving |
| Moving-off on E-gear ES1 | X | | X | | | D2 | | Driving |
| Moving-off on ICE S1 | X | | X | | X | D2 | | Driving |
| Moving-off on ECVT1 | X | | | | X | D3 | | Power generation |
| S1 / boost | X | | X | | X | D2 | | Power generation / driving |
| S1-S2 shift / | X | | | | X | D3 | 100% | Braking |
| ECVT1 | | | | | | | (passive) | |
| S2 | X | | | | X | D3 | | Power generation (small speed) |
| S2-S3 shift /ECVT1 | X | | | | X | D3 | 100% (active) | Driving |
| S3, preselected G1/2 | X | | | X | X | D4 | | Power generation |
| S3, doing preselection | | | | X | X | D5 | | Shaft speed synchronization |
| S3, preselected G4/5 | | X | | X | X | D6 | | Power generation |
| S3-S4 shift /ECVT2 | | X | | | X | D7 | 70% (passive) | Braking / power generation |
| S4 /boost | | X | X | | X | D8 | | Power generation / driving |
| S4-S5 shift / ECVT2 | | X | | | X | D7 | 70% (passive) | Braking / power generation |
| S5 | | X | | | X | D7 | | Power generation (small speed) |
| ES1 / cranking | X | | X | | -/X | D2 | | Driving |
| Shifting ES1 - ES2 | | | X | | | D1 | 0% | Shaft speed synchronization |
| ES2 / cranking | | X | X | | -/X | D8 | | Driving |

Again, the references D1 to D8 indicate angular positions of the drum 30 (see Fig. 32). The column "Torque fill at WOT" shows the Torque fill by electric machine 17 at engine's maximum intake of air and fuel (WOT=wide open throttle).

Fig. 3 shows a shift pattern of the first and second embodiments shown in Fig. 1 and 2, wherein angular positions D1 to D8 of the shifting drum 30 are indicated. References "A" indicate fixed gears on the first driveshaft 13 with gear preselection opportunity on second driveshaft 14. References "B" indicate fixed gears on second driveshaft 14 with lock-up clutch C2L engaged. References "C" indicate mechanical points with power generation at high torque and low speed of output shafts 28a, 28b of the transmission. "E" indicate electric speeds. The lines, connecting the speeds, indicate possible direct shifts, with corresponding angular positions of the shifting drum 30 also indicated. In detail solid lines indicate torque filled shifts and dashed lines indicate torque interrupted shifts.

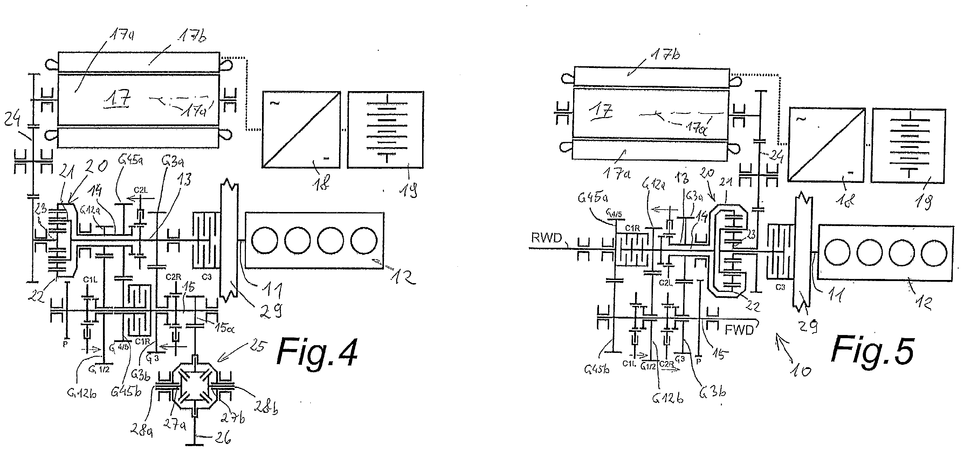

The third embodiment of the transmission 10 shown in Fig. 4 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 3^{rd} electric speeds ES1 and ES3 are designed. The first controllable clutch C3 and the fourth controllable clutch C1R are designed as dry multiple plate friction clutches. The second C2R, third C1L, and fifth controllable clutches C2L are formed by dog clutches.

The third embodiment enables a 10-mode powertrain in a transverse arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected G1/2 | X | | | X | X | | Power generation |
| S3, doing preselection G1/G2-G4/G5 | | | | X | X | | Shaft speed synchronization |
| S3, ready for S3-S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3-S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES3 power-on shift | X | X | X | | | 100% (power shift) | Driving |
| ES3 / cranking | | X | X | | -/X | | Driving |
| ES2 / cranking | | | X | X | -/X | | Driving |

The column "Torque fill at WOT" shows the Torque fill by electric machine 17 at engine's maximum intake of air and fuel (WOT=wide open throttle).

The fourth embodiment of the transmission 10 shown in Fig. 5 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 3^{rd} electric speeds ES1 and ES3 are designed. The 4^{th} speed S4 is designed as direct prime mover speed. The 5^{th} speed S5 is formed as overdrive speed with improved efficiency (no cylindrical gears engaged). The first controllable clutch C3 and the fourth controllable clutch C1R are designed as dry multiple plate friction clutches. The second C2R, third C1L, and fifth controllable clutches C2L are formed by dog clutches.

The fourth embodiment enables a 10-mode powertrain with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-gear ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected | X | | | X | X | | Power generation |
| G1/2 | | | | | | | |
| S3, doing preselection G1/G2-G4/G5 | | | | X | X | | Shaft speed synchronization |
| S3, ready for S3-S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3-S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES3 power-on shift | X | X | X | | | 100% (power shift) | Driving |
| ES3 / cranking | | X | X | | -/X | | Driving |
| ES2 / cranking | | | X | X | -/X | | Driving |

The column "Torque fill at WOT" shows the Torque fill by electric machine 17 at engine's maximum intake of air and fuel (WOT=wide open throttle).

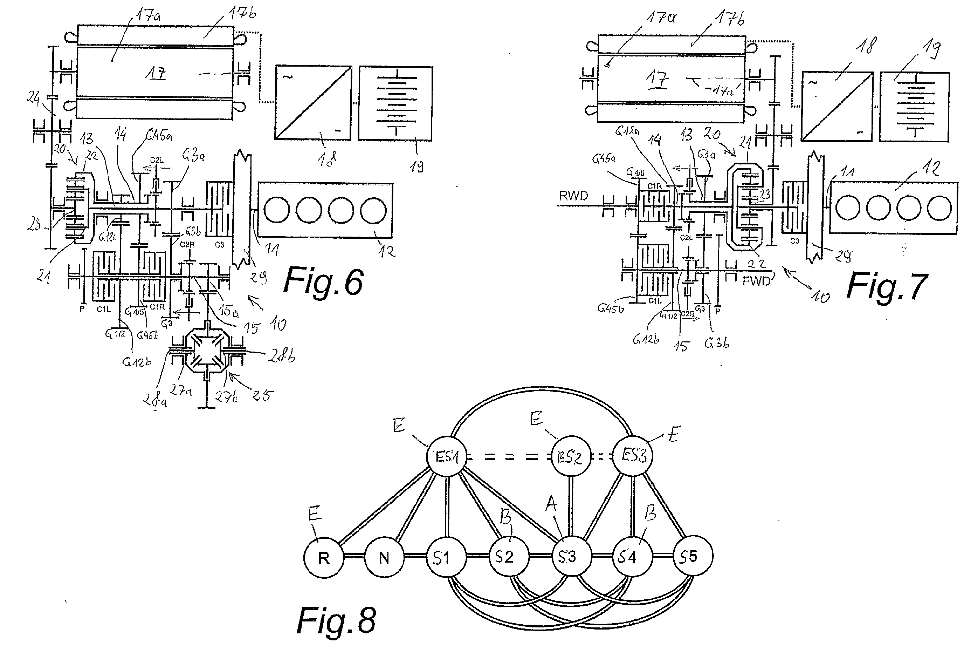

The fifth embodiment of the transmission 10 shown in Fig. 6 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Powershifts between 1^{st} and 3^{rd} electric speeds ES1 and ES3 are designed. The first controllable clutch C3, the third controllable clutch C1L and the fourth controllable clutch C1R are designed as dry multiple plate friction clutches. The second C2R and fifth controllable clutches C2L are formed by dog clutches.

The fifth embodiment enables a 10-mode powertrain in a transverse arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, | X | | | X | X | | Power generation |
| S3, ready for S3-S4 powershift | | | X | X | X | | Power generation |
| S3-S4 shift | | X | X | X | X | 100% (power shift) | Idling |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES3 power-on shift | X | X | X | | | 100% (power shift) | Driving/power generation |
| ES3 / cranking | | X | X | | -/X | | Driving |
| ES2 / cranking | | | X | X | -/X | | Driving |

The column "Torque fill at WOT" shows the Torque fill by electric machine 17 at engine's maximum intake of air and fuel (WOT=wide open throttle).

The sixth embodiment of the transmission 10 shown in Fig. 7 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Powershifts between 1^{st} and 3^{rd} electric speeds ES1 and ES3 are designed. The 4^{th} speed S4 is designed as direct prime mover speed. The 5^{th} speed S5 is formed as overdrive speed with improved efficiency (no cylindrical gears engaged). The first controllable clutch C3, the third controllable clutch C1L and the fourth controllable clutch C1R are designed as dry multiple plate friction clutches. The second C2R and fifth controllable clutches C2L are formed by dog clutches.

The sixth embodiment enables a 10-mode powertrain with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, | X | | | X | X | | Power generation |
| S3, ready for S3-S4 powershift | | | X | X | X | | Power generation |
| S3-S4 shift | | X | X | X | X | 100% (power shift) | Idling |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES3 power-on shift | X | X | X | | | 100% (power shift) | Driving/power generation |
| ES3 / cranking | | X | X | | -/X | | Driving |
| ES2 / cranking | | | X | X | -/X | | Driving |

The column "Torque fill at WOT" shows the Torque fill by electric machine 17 at engine's maximum intake of air and fuel (WOT=wide open throttle).

Fig. 8 shows a shift pattern of the third to sixth embodiments shown in Fig. 4 to 7. References "A" indicate fixed gears on the first driveshaft 13 with gear preselection opportunity on second driveshaft 14. References "B" indicate fixed gears on second driveshaft 14 with lock-up clutch C2L engaged. References "C" indicate mechanical points with power generation at high torque and low speed of output shafts 28a, 28b of the transmission. "E" indicate electric speeds. The lines, connecting the speeds, indicate possible direct shifts. In detail solid lines indicate torque filled shifts/powershifts and dashed lines indicate torque interrupted shifts.

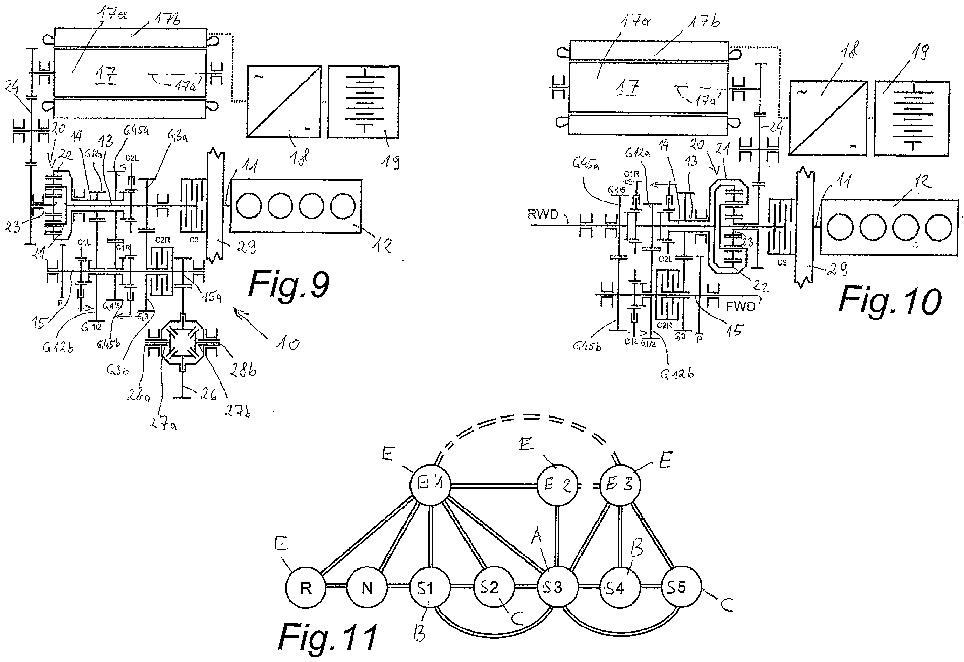

The seventh embodiment of the transmission 10 shown in Fig. 9 comprises five prime mover based speeds S1, S2, S3, S4, S5 (70% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 2^{nd} electric speeds ES1 and ES2 are designed. The first controllable clutch C3 and the second controllable clutch C2R are designed as dry multiple plate friction clutches. The third controllable clutch C1L, the fourth controllable clutch C1R and fifth controllable clutches C2L are formed by dog clutches.

The seventh embodiment enables a 10-mode powertrain in a transverse arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected G1/G2 | X | | | X | X | | Power generation |
| S3, doing preselection | | | | X | X | | Shaft speed synchronization |
| S3, preselected G4 / G5 | | X | | X | X | | Power generation |
| S3-S4 shift / ECVT2 | | X | | | X | 70% (passive) | Braking / power generation |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| ES1 / cranking | X | | X | | -/X | | Driving |
| ES1 - ES2 power-on shift | X | | X | X | | 100% (power shift) | Driving |
| ES2 / cranking | | | X | X | -/X | | Driving |
| ES3 / cranking | | X | X | | -/X | | Driving |

The column "Torque fill at WOT" shows the Torque fill by electric machine 17 at engine's maximum intake of air and fuel (WOT=wide open throttle).

The eighth embodiment of the transmission 10 shown in Fig. 10 comprises five prime mover based speeds S1, S2, S3, S4, S5 (70% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 2^{nd} electric speeds ES1 and ES2 are designed. The 4^{th} speed S4 is designed as direct prime mover speed. The 5^{th} speed S5 is formed as overdrive speed with improved efficiency (no cylindrical gears engaged). The first controllable clutch C3 and the second controllable clutch C2R are designed as dry multiple plate friction clutches. The third controllable clutch C1L, the fourth controllable clutch C1R and fifth controllable clutches C2L are formed by dog clutches.

The eighth embodiment enables a 10-mode powertrain in a longitudinal arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected G1/G2 | X | | | X | X | | Power generation |
| S3, doing preselection | | | | X | X | | Shaft speed synchronization |
| S3, preselected G4 / G5 | | X | | X | X | | Power generation |
| S3-S4 shift / ECVT2 | | X | | | X | 70% (passive) | Braking / power generation |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| ES1 / cranking | X | | X | | -/X | | Driving |
| ES1 - ES2 power-on shift | X | | X | X | | 100% (power shift) | Driving |
| ES2 / cranking | | | X | X | -/X | | Driving |
| ES3 / cranking | | X | X | | -/X | | Driving |

The column "Torque fill at WOT" shows the Torque fill by electric machine 17 at engine's maximum intake of air and fuel (WOT=wide open throttle).

Fig. 11 shows a shift pattern of the seventh and eighth embodiments shown in Fig. 9 and 10. References "A" indicate fixed gears on the first driveshaft 13 with gear preselection opportunity on second driveshaft 14. References "B" indicate fixed gears on second driveshaft 14 with lock-up clutch C2L engaged. References "C" indicate mechanical points with power generation at high torque and low speed of output shafts 28a, 28b of the transmission. "E" indicate electric speeds. The lines, connecting the speeds, indicate possible direct shifts. In detail solid lines indicate torque filled shifts/powershifts and dashed lines indicate torque interrupted shifts.

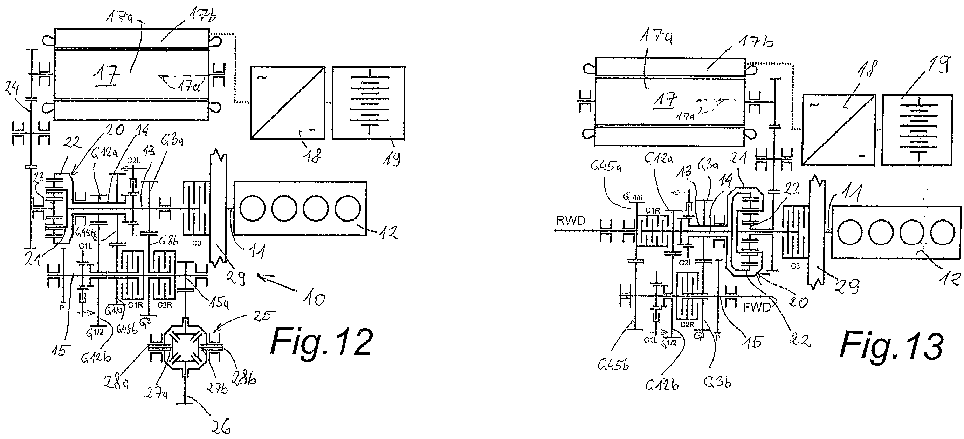

The ninth embodiment of the transmission 10 shown in Fig. 12 comprises five prime mover based speeds S1,S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 2^{nd} electric speeds ES1 and ES2 and powershifts between 2^{nd} and 3^{rd} electric speeds ES2, ES3 are designed. The first controllable clutch C3, the second controllable clutch C2R and the fourth controllable clutch C1R are designed as dry multiple plate friction clutches. The third controllable clutch C1L and fifth controllable clutches C2L are formed by dog clutches.

The ninth embodiment enables a 10-mode powertrain in a transverse arrangement with operating conditions as follows:

| **Speeds** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speeds ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift/ECVT1 | X | | | | X | 100% (active) | Driving |
| S3, preselected S1 / S2 | X | | | X | X | | Power generation |
| S3, doing preselection G1/G2 - G4/G5 | | | | X | X | | Shaft speed synchronization |
| S3, ready for S3 - S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3 - S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES2 power-on shift | X | | X | X | | 100% (power shift) | Driving |
| ES2 / cranking | | | X | X | -/X | | Driving |
| ES2 - ES3 power-on shift | | X | X | X | | 100% (power shift) | Driving/power generation |
| ES3 / cranking | | X | X | | -/X | | Driving |

The column "Torque fill at WOT" shows the Torque fill by electric machine 17 at engine's maximum intake of air and fuel (WOT=wide open throttle).

The tenth embodiment of the transmission 10 shown in Fig. 13 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3, S4, and two electronically controlled continuously variable transmission modes ECVT1, ECVT2. Electric boost is enabled at 1^{st}, 3^{rd} and 4^{th} speeds S1, S3, S4. Power-on powershifts between 1^{st} and 2^{nd} electric speeds ES1 and ES2 and powershifts between 2^{nd} and 3^{rd} electric speeds ES2, ES3 are designed The 4^{th} speed S4 is designed as direct prime mover speed. The 5^{th} speed S5 is formed as overdrive gear with improved efficiency (no cylindrical gears engaged). The first controllable clutch C3, the second controllable clutch C2R and the fourth controllable clutch C1R are designed as dry multiple plate friction clutches. The third controllable clutch C1L and fifth controllable clutches C2L are formed by dog clutches.

The tenth embodiment enables a 10-mode powertrain in a longitudinal arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected S1 / S2 | X | | | X | X | | Power generation |
| S3, doing preselection G1/G2 - G4/G5 | | | | X | X | | Shaft speed synchronization |
| S3, ready for S3 - S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3 - S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES2 power-on shift | X | | X | X | | 100% (power shift) | Driving |
| ES2 / cranking | | | X | X | -/X | | Driving |
| ES2 - ES3 power-on shift | | X | X | X | | 100% (power shift) | Driving/power generation |
| ES3 / cranking | | X | X | | -/X | | Driving |

The column "Torque fill at WOT" shows the Torque fill by electric machine 17 at engine's maximum intake of air and fuel (WOT=wide open throttle).

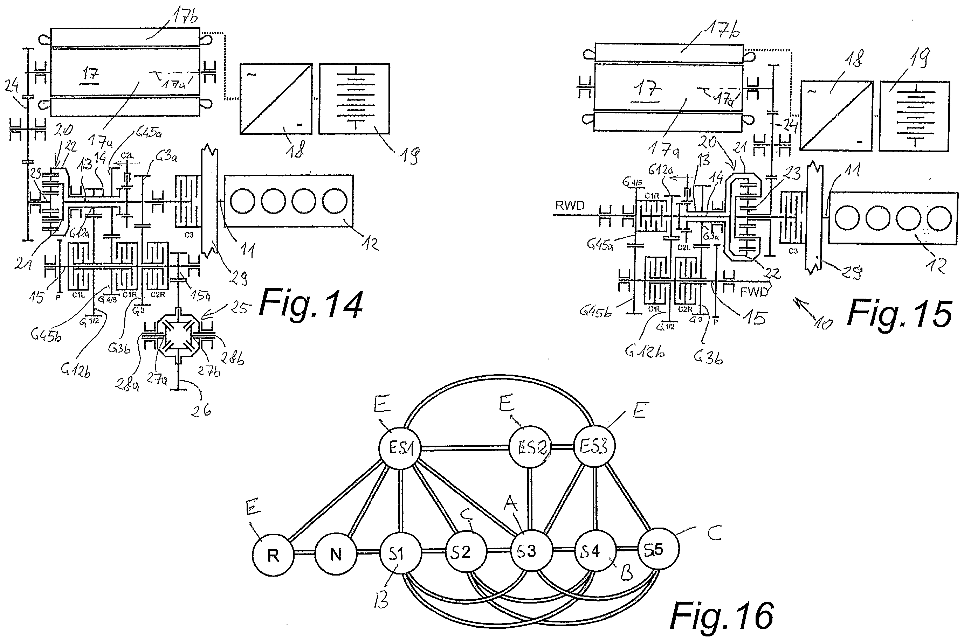

The eleventh embodiment of the transmission 10 shown in Fig. 14 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Powershifts between 1^{st}, 2^{nd} and 3^{rd} electric speeds ES2, ES3 are designed. The first controllable clutch C3, the second controllable clutch C2R, third controllable clutch C1L and the fourth controllable clutch C1R are designed as dry multiple plate friction clutches. The fifth controllable clutch C2L is formed by a dog clutch.

The eleventh embodiment enables a 10-mode powertrain in a transverse arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE S1 | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected G1 / G2 | X | | | X | X | | Power generation |
| S3, doing preselection G1/G2 - G4/G5 | | | | X | X | | Shaft speed synchronization |
| S3, ready for S3 - S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3 - S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/X | | Driving |
| ES1 - ES2 power-on shift | X | | X | X | | 100% (power shift) | Driving |
| ES2 / cranking | | | X | X | -/X | | Driving |
| ES2 - ES3 power-on shift | | X | X | X | | 100% (power shift) | Driving/power generation |
| ES3 / cranking | | X | X | | -/X | | Driving |

The column "Torque fill at WOT" shows the Torque fill by electric machine 17 at engine's maximum intake of air and fuel (WOT=wide open throttle).

The twelfth embodiment of the transmission 10 shown in Fig. 15 comprises five prime mover based speeds S1, S2, S3, S4, S5 (100% powershifts), three electric speeds ES1, ES2, ES3 associated to 1^{st}, 3^{rd} and 4^{th} prime mover based speeds S1, S3 S4, and two electronically controlled continuously variable transmission modes ECVT1, ECVT2. Electric boost is enabled at 1^{st}, 3^{rd} and 4^{th} speeds S1, S3, S4. Powershifts between 1^{st}, 2^{nd} and 3^{rd} electric speeds ES2, ES3 are designed. The 4^{th} speed S4 is designed as direct prime mover speed. The 5^{th} speed S5 is formed as overdrive speed with improved efficiency (no cylindrical gears engaged). The first controllable clutch C3, the second controllable clutch C2R, third controllable clutch C1L and the fourth controllable clutch C1R are designed as dry multiple plate friction clutches. The fifth controllable clutch C2L is formed by a dog clutch.

The twelfth embodiment enables a 10-mode powertrain in a longitudinal arrangement with operating conditions as follows:

| **Speed** | **C1L** | **C1R** | **C2L** | **C2R** | **C3** | **Torque fill at WOT** | **Electric Machine 17 Mode** |
|---|---|---|---|---|---|---|---|
| Battery charging / engine cranking | | | X | | X | | Power generating / driving |
| Moving-off on E-speed ES1 | X | | X | | | | Driving |
| Moving-off on ICE SI | X | | X | | X | | Driving |
| Moving-off on ECVT1 | X | | | | X | | Power generation |
| S1 / boost | X | | X | | X | | Power generation / driving |
| S1-S2 shift / ECVT1 | X | | | | X | 100% (passive) | Braking / power generation |
| S2 | X | | | | X | | Power generation (small speed) |
| S2-S3 shift /ECVT1 | X | | | | X | 100% (active) | Driving |
| S3, preselected G1/2 | X | | | X | X | | Power generation |
| S3, doing preselection G1/2 - G4/5 | | | | X | X | | Shaft speed synchronization |
| S3, ready for S3 - S4 torque filled shift | | X | | X | X | | Power generation |
| S3, ready for S3-S4 powershift | | | X | X | X | | Power generation |
| S3-S4 power-on powershift | | X | X | X | X | 100% (power shift) | Idling |
| S3 - S4 power-off torque filled shift / ECVT2 | | X | | | X | 100% (active) | Driving |
| S4 / boost | | X | X | | X | | Power generation / driving |
| S4-S5 shift / ECVT2 | | X | | | X | 100% (passive) | Braking / power generation |
| S5 | | X | | | X | | Power generation (small speed) |
| S1-S4 direct power-on shift | X | X | X | | X | 100% (power shift) | Idling |
| S2-S4 direct power-on shift | X | X | | | X | 70% (passive) | Braking/power generation |
| S2-S5 direct power-on shift | X | X | | | X | 100% (power shift) | Power generation (small speed) |
| ES1 / cranking | X | | X | | -/x | | Driving |
| ES1 - ES2 power-on shift | X | | X | X | | 100% (power shift) | Driving |
| ES2 / cranking | | | X | X | -/x | | Driving |
| ES2 - ES3 power-on shift | | X | X | X | | 100% (power shift) | Driving/power generation |
| ES3 / cranking | | X | X | | -/x | | Driving |

The column "Torque fill at WOT" shows the Torque fill by electric machine 17 at engine's maximum intake of air and fuel (WOT=wide open throttle).

Fig. 16 shows a shift pattern of the ninth and twelfth embodiments shown in Fig. 12 to 15. References "A" indicate fixed gears on the first driveshaft 13 with gear preselection opportunity on second driveshaft 14. References "B" indicate fixed gears on second driveshaft 14 with lock-up clutch C2L engaged. References "C" indicate mechanical points with power generation at high torque and low speed of output shafts 28a, 28b of the transmission. "E" indicate electric speeds. The solid lines, connecting the gears, indicate possible direct torque filled shifts or powershifts.

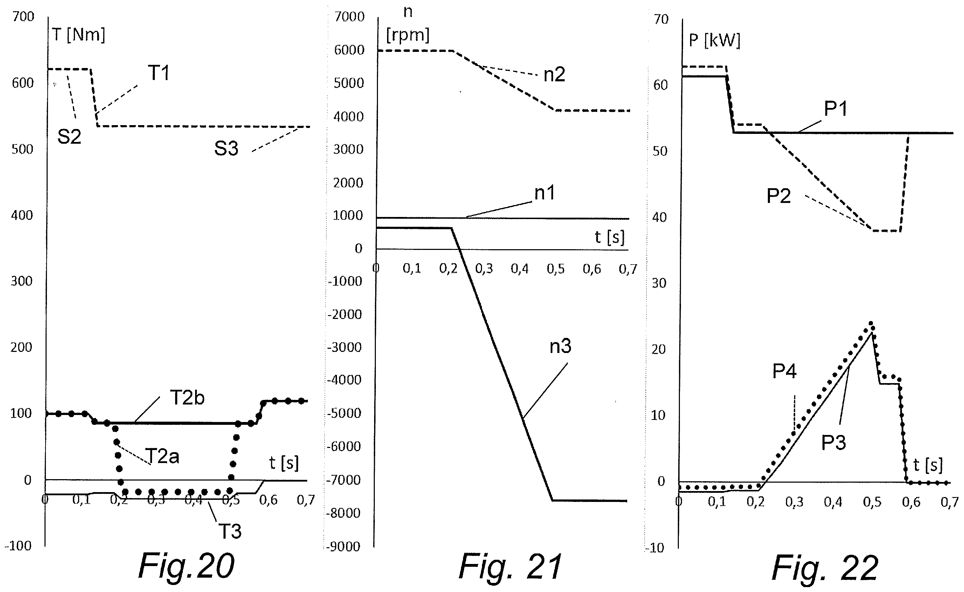

As illustrated in the Fig. 20 to 30 the electric machine 17 is controlled by the power inverter 18 during torque-filled shifts between at least two different speeds in a way that it allows to reduce torque value down to zero on the first driveshaft 13 by applying driving rotor shaft power in case of negative direction of rotation of the rotor 17a, and applying brake rotor shaft power in case of positive direction of rotation of the rotor 17a, wherein the brake power is partly dissipated in the electric machine 17 as a heat and partly delivered to the battery 19 with associated electric power consumers, and the driving power plus internal losses are taken from the battery 19, wherein the torque on the input shaft 11 is dynamically limited by the control system of the prime mover 12 and the control system (inverter) 18 of the electric machine 17 in case if required battery power plus internal losses from the battery 19 exceed the capacity of the battery 19 and/or the control system (inverter) 18 to reduce torque value down to zero on the first driveshaft 13 with full torque on the input shaft 11.

Fig. 20, 21 and 22 show an active torque-filled shifting example, i.e. shifting G2-G3 (ECVT1) with 100% torque fill, of the first embodiment shown in Fig. 1.

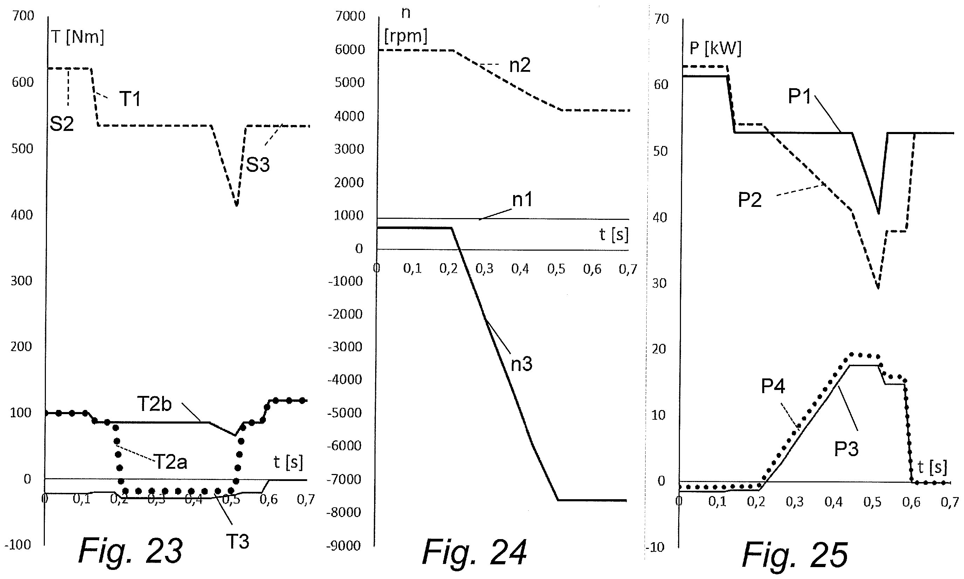

Fig. 23, 24 and 25 show another active torque-filled shifting example, i.e. shifting G2-G3 (ECVT1) with 70% torque fill, of the first embodiment shown. In Fig. 20 and 23 the wheel torque T1, the engine torque T2a from firing and the engine dynamic torque T2b of the prime mover 12 and the torque T3 of the electric machine 17 are drafted in dependence of the time t. In Fig. 21 and 24 the wheel speed n1, the engine speed n2 of the prime mover 12 and the rotational speed n3 of the electric machine 17 are drafted in dependence of the time t. In Figs. 22 and 25 the wheel power P1, the engine dynamic power P2 of the prime mover 12 and the shaft power P3 of the electric machine 17 are drafted in dependence of the time t. Additionally an injection of battery power P4 is plotted.

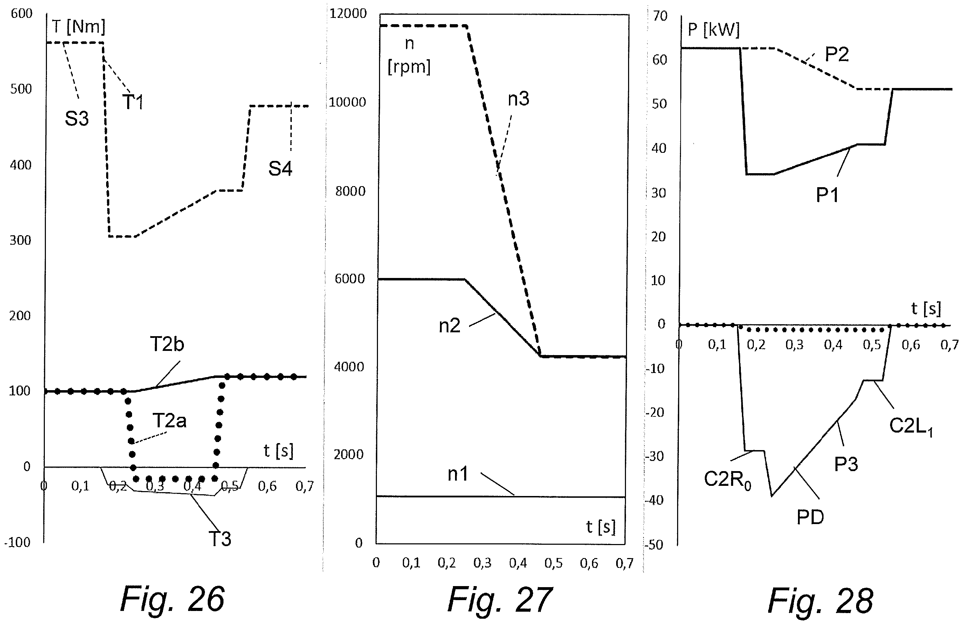

Fig. 26, 27 and 28 show a passive torque-filled shifting example, i.e. shifting G3-G4 (ECVT2), of the first embodiment shown in Fig. 1. In Fig. 26 the wheel torque T1, the engine torque T2a from firing and the engine dynamic torque T2b of the prime mover 12 and the torque T3 of the electric machine 17 are drafted in dependence of the time t. In Fig. 27 the wheel speed n1, the engine speed n2 of the prime mover 12 and the speed n3 of the electric machine 17 are drafted in dependence of the time t. In Fig. 28 the wheel power P1, the engine dynamic power P2 of the prime mover 12 and the shaft power P3 of the electric machine 17 are drafted in dependence of the time t. C2Rₒ indicates the disengagement of the second controllable clutch C2R and C2L₁ indicates the engagement of the fifth controllable clutch C2L. Reference PD indicates the dissipated power in the rotor cage during passive torque fill phase.

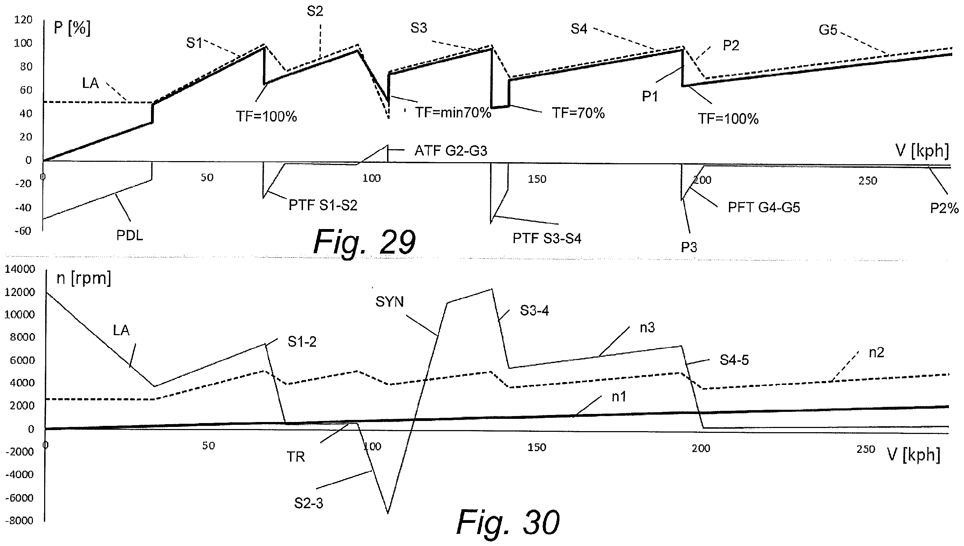

Fig. 29 shows a power flow chart example for torque filled shifts at wide open throttle of a transmission according to the first embodiment shown in Fig. 1. In the chart the wheel power P1, the power P2 of the prime mover 12 (combustion engine) and the power P3 of the electric machine 17 are drafted in dependence of the speed v of vehicle. Fig. 30 shows a rotational speed chart example for such five speed transmission with wheel rotational speed n1, rotational speed n2 of the prime mover 12 and rotational speed n3 of the electric machine 17 in dependence of the speed v of vehicle. In this charts "LA" indicates the launch of the vehicle. During launch LA and during each of the speed shifts S1-2, S2-3, S3-4, S4-5 the electric machine 17 absorbs or injects power in order to provide torque fill during shifting. Passive torque fills with power absorption are indicated with PTF, active torque fills with power injection with ATF. PDL indicates the power dissipation (generating) by the electric machine 17 during launch LA. In Fig. 29 T_{F}=70% and T_{F}=100% indicate minimal torque fill level during shifting by absorbing power with the electric machine 17. After speed shift S4-5 the electric machine 17 generates constant electric power P2%, for example 1...2 % of engine rated power. In this operating range the electric machine 17 is rotating at slow rotational speed n3, providing torque reaction and electric power generation. This power is consumed by the electric system of the vehicle. The ramp SYN of the rotational speed n3 shown in Fig. 30 indicate shaft speed synchronization for 1^{st} gear/2^{nd} Gear G1/G2 or 4^{th} /5^{th} gear G4/G5 respectively. Torque reaction of the rotor 17a of the electric machine 17 is indicated with TR.

## Claims

1. A multi-speed transmission (10), especially for a vehicle, comprising an input shaft (11), a first driveshaft (13), a second driveshaft (14), a driven shaft (15), an electric machine (17) with a rotor (17a), a planetary gearset (20) with three links (21, 22, 23), a first (21) of said links being constantly connected to the first driveshaft (13), and being connectable to the input shaft (11) with a first controllable clutch (C3), a second (22) of said links being connected to the second driveshaft (14), and a third (23) of said links being kinematically connected to the rotor (17a) of said electric machine (17), wherein the transmission (10) further comprises
a first gearing (G1/2) for shifting a first (S1) and second speed (S2), a second gearing (G3) for shifting a third speed (S3), a third gearing (G4/5) for shifting fourth (S4) and fifth speed (S5),
a second controllable clutch (C2R) for kinematic connection of the first driveshaft (13) with the driven shaft (15) by the second gearing (G3), a third controllable clutch (C1L) and a fourth controllable clutch (C1R) for kinematic connection of the second driveshaft (14) with the driven shaft (15) by the first and third gearings (G1/2, G4/5) respectively with different gear ratios, and a fifth controllable lock-up clutch (C2L) for direct connection between first (13) and second driveshafts (14), wherein:
a first gear ratio i_{G12} between meshing gearwheels (G12a, G12b) of the first gearing (G1/2) with one of said gearwheels (G12a) arranged on the second driveshaft (14) has a defined value;
**characterised in that**
a speed ratio i_{PGS} between the second link (22) and the third link (23) for stopped first link (21) has a defined value: i_{PGS} <0;
a second gear ratio i_{G3} between meshing gearwheels (G3a, G3b) of the second gearing (G3) with one of said gearwheels (G3a) arranged on the first driveshaft (13) matches the inequality i_{G3} < i_{G12}/ (1-(1/i_{PGS}));
a third gear ratio i_{G45} between meshing gearwheels (G45a, G45b) of the third gearing (G4/5) matches the inequality i_{G45} < i_{G3}.

2. The multi-speed transmission (10) according to claim 1, **characterised in that**
the first speed (S1) with a highest speed ratio from the first driveshaft (13) to the driven shaft (15) is provided by simultaneous engagement of the third clutch (C1L) and the fifth clutch (C2L);
the second speed (S2) with a speed ratio from the first driveshaft (13) to the driven shaft (15), smaller than on the first speed (S1), is provided by engagement of the third clutch (C1L) and an electrical lock of the electric machine rotor (17a);
the third speed (S3) with the second gear ratio i_{G3} from the first driveshaft (13) to the driven shaft (15), smaller than on the second speed (S2), is provided by engagement of the second clutch (C2R);
the fourth speed (S4) with a speed ratio from the first driveshaft (13) to the driven shaft (15), smaller than on the third speed (S3), is provided by simultaneous engagement of the fourth clutch (C1R) and the fifth clutch (C2L);
the fifth speed (G5) with a speed ratio from the first driveshaft (13) to the driven shaft (15), smaller than on the fourth speed (S4), is provided by engagement of the fourth clutch (C1R) and electrical lock of the electric machine rotor (17a).

3. The multi-speed transmission (10) according to claim 1 or 2, **characterised in that** the first link (21) of the planetary gearset (20) is a planet carrier, the second link (22) is a ring gear, and the third link (23) is a sun gear.

4. The multi-speed transmission (10) according to one of the claims 1 to 3, **characterised in that** the second driveshaft (14) is mounted internally through the first driveshaft (13).

5. The multi-speed transmission (10) according to one of the claims 1 to 4, **characterised in that** the transmission (10) further comprises a first output shaft with a gear on it, constantly meshing with a pinion, fixed on the driven shaft.

6. The multi-speed transmission (10) according to one of the claims 1 to 5, **characterised in that** the first driveshaft (13) comprises one gearwheel (G3a), meshing with the gearwheel (G3b) on the driven shaft (15), and the second driveshaft (14) comprises two gearwheels (G12a, G45a), meshing with corresponding gearwheels (G12b, G45b) on the driven shaft (15), wherein one gearwheel in each said gearwheel meshing is constantly connected to corresponding shaft, and another gearwheel in said gearwheel meshing is engageable to corresponding shaft by the corresponding second, third or fourth clutch (C2R, C1L, C1R) (Fig. 1, 4, 6, 9, 12, 14, 17).

7. The multi-speed transmission (10) according to one of the claims 1 to 5, **characterised in that** the first driveshaft (13) comprises one gearwheel (G3a), meshing with the gearwheel (G3b) on the driven shaft (15), and the second driveshaft (14) comprises one gearwheel (G12a), meshing with corresponding gearwheel (G12b) on the driven shaft (15), wherein one gearwheel in each said gearwheel meshing is constantly connected to corresponding shaft, another gearwheel in said gearwheel meshing is engageable to corresponding shaft by corresponding second or third clutch (C2R, C1L), and the second driveshaft (14) is directly engageable to a first output shaft (RWD) by the fourth clutch (C1R) (Fig. 2, 5, 7, 10, 13, 15 and 18).

8. The multi-speed transmission (10) according to claim 7, **characterised in that** it further comprises a second output shaft (FWD), wherein the first output shaft (RWD) is engageable to a first driving axle of the vehicle, and the second output shaft (RWD) is kinematically connected to the driven shaft (15) and is engageable to a second driving axle of the vehicle.

9. The multi-speed transmission (10) according to one of the claims 1 to 8, **characterised in that** a vibration-damping device (29) is arranged on the input shaft.

10. The multi-speed transmission (10) according to one of the claims 1 to 9, **characterised in that** the first clutch (C3) is embodied as dry friction clutch.

11. The multi-speed transmission (10) according to one of the claims 1 to 9, **characterised in that** the first clutch (C3) is embodied as wet friction clutch.

12. The multi-speed transmission (10) according to one of the claims 1 to 11, **characterised in that** at least one of the clutches (C1L, C1R, C2L, C2R) are dog clutches or dog clutch synchronizers.

13. The multi-speed transmission (10) according to claim 12, **characterised in that** at the third clutch (C1L) and the fourth clutch (C1R) are embodied as dog clutches and share a common shifting sleeve.

14. The multi-speed transmission (10) according to claim 12 or 13, **characterised in that** the second clutch (C2L) and the fifth clutch (C2R) are embodied as dog clutches and share common shifting sleeve.

15. The multi-speed transmission (10) according to one of the claims 1 to 14, **characterised in that** the clutches (C1L, C1R, C2L, C2R) are engaged by a single electrically driven shifting drum (30).

16. The multi-speed transmission (10) according to one of the claims 1 to 15, **characterised in that** it comprises a park brake device (P), locking the driven shaft to a housing of the transmission (10).

17. The multi-speed transmission (10) according to one of the claims 1 to 16, **characterised in that** the rotor (17a) of the electric machine (17) is connected to the third link (23) of the planetary gearset (20) via a cylindrical geartrain (24), and the axis (17a') of the rotor (17a) is placed apart from the axis (11) of the input shaft.

18. The multi-speed transmission (10) according to one of the claims 1 to 16, **characterised in that** the rotor (17a) of the electric machine (17) is directly connected to the third link (23) of the planetary gearset (20), and the rotor (17a) is arranged coaxial to the first and second driveshafts (13, 14).

19. The multi-speed transmission (10) according to one of the claims 1 to 18, **characterised in that** the electric machine (17) is an induction machine with squirrel-cage rotor, a synchronous permanent magnet machine or a hysteresis machine.

20. The multi-speed transmission according (10) to one of the claims 1 to 19, **characterised in that** the rotor (17a) further comprises at least one cooling channel (32) for liquid cooling.

## Patentansprüche

1. Mehrganggetriebe (10), insbesondere für ein Fahrzeug, umfassend eine Eingangswelle (11), eine erste Antriebswelle (13), eine zweite Antriebswelle (14), eine Abtriebswelle (15), eine elektrische Maschine (17) mit einem Rotor (17a), ein Planetengetriebe (20) mit drei Gliedern (21, 22, 23), wobei ein erstes (21) dieser Glieder ständig mit der ersten Antriebswelle (13) verbunden ist und mittels einer ersten steuerbaren Kupplung (C3) mit der Eingangswelle (11) verbunden werden kann, eine zweites (22) dieser Glieder mit der zweiten Antriebswelle (14) verbunden ist und ein drittes (23) dieser Glieder kinematisch mit dem Rotor (17a) der elektrischen Maschine (17) verbunden ist, wobei das Getriebe (10) ferner umfasst
ein erstes Getriebe (G1/2) zum Einlegen eines ersten (S1) und eines zweiten Gangs (S2), ein zweites Getriebe (G3) zum Einlegen eines dritten Gangs (S3), ein drittes Getriebe (G4/5) zum Einlegen eines vierten (S4) und fünften Gangs (S5),
eine zweite steuerbare Kupplung (C2R) für die kinematische Verbindung der ersten Antriebswelle (13) mit der Abtriebswelle (15) durch das zweite Getriebe (G3), eine dritte steuerbare Kupplung (C1L) und eine vierte steuerbare Kupplung (C1R) für die kinematische Verbindung der zweiten Antriebswelle (14) mit der Abtriebswelle (15) durch das erste bzw. das dritte Getriebe (G1/2, G4/5) mit jeweils unterschiedlichen Übersetzungsverhältnissen und eine fünfte steuerbare Überbrückungskupplung (C2L) für die direkte Verbindung zwischen der ersten (13) und der zweiten Antriebswelle (14), wobei:
ein erstes Übersetzungsverhältnis i_{G12} zwischen kämmenden Zahnrädern (G12a, G12b) des ersten Getriebes (G1/2), wobei eines dieser Zahnräder (G12a) auf der zweiten Antriebswelle (14) angeordnet ist, einen definierten Wert aufweist;
**dadurch gekennzeichnet, dass**
ein Drehzahlverhältnis i_{PGS} zwischen dem zweiten Glied (22) und dem dritten Glied (23) bei stillstehendem ersten Glied (21) einen definierten Wert aufweist: i_{PGS} <0;
ein zweites Übersetzungsverhältnis i_{G3} zwischen kämmenden Zahnrädern (G3a, G3b) des zweiten Getriebes (G3), wobei eines dieser Zahnräder (G3a) auf der ersten Antriebswelle (13) angeordnet ist, der Ungleichung i_{G3} < i_{G12} / (1-(1/i_{PGS})) entspricht;
ein drittes Übersetzungsverhältnis i_{G45} zwischen kämmenden Zahnrädern (G45a, G45b) des dritten Getriebes (G4/5) der Ungleichung i_{G45} < i_{G3} entspricht.

2. Mehrganggetriebe (10) nach Anspruch 1, **dadurch gekennzeichnet, dass**
der erste Gang (S1) mit einem größten Drehzahlverhältnis von der ersten Antriebswelle (13) zur Abtriebswelle (15) durch gleichzeitigen Eingriff der dritten Kupplung (C1L) und der fünften Kupplung (C2L) bereitgestellt wird;
der zweite Gang (S2) mit einem Drehzahlverhältnis von der ersten Antriebswelle (13) zur Abtriebswelle (15), das kleiner ist als beim ersten Gang (S1), durch Eingriff der dritten Kupplung (C1L) und eine elektrische Verriegelung des Rotors (17a) der elektrischen Maschine bereitgestellt wird;
der dritte Gang (S3) mit dem zweiten Übersetzungsverhältnis i_{G3} von der ersten Antriebswelle (13) zur Abtriebswelle (15), das kleiner ist als beim zweiten Gang (S2), durch Eingriff der zweiten Kupplung (C2R) bereitgestellt wird;
der vierte Gang (S4) mit einem Drehzahlverhältnis von der ersten Antriebswelle (13) zur Abtriebswelle (15), das kleiner ist als beim dritten Gang (S3), durch gleichzeitigen Eingriff der vierten Kupplung (C1R) und der fünften Kupplung (C2L) bereitgestellt wird;
der fünfte Gang (G5) mit einem Drehzahlverhältnis von der ersten Antriebswelle (13) zur Abtriebswelle (15), das kleiner ist als beim vierten Gang (S4), durch Eingriff der vierten Kupplung (C1R) und elektrische Verriegelung des Rotors (17a) der elektrischen Maschine bereitgestellt wird.

3. Mehrganggetriebe (10) nach Anspruch 1 oder 2, **dadurch gekennzeichnet, dass** das erste Glied (21) des Planetengetriebes (20) ein Planetenträger ist, das zweite Glied (22) ein Hohlrad ist und das dritte Glied (23) ein Sonnenrad ist.

4. Mehrganggetriebe (10) nach einem der Ansprüche 1 bis 3, **dadurch gekennzeichnet, dass** die zweite Antriebswelle (14) innen durch die erste Antriebswelle (13) hindurch montiert ist.

5. Mehrganggetriebe (10) nach einem der Ansprüche 1 bis 4, **dadurch gekennzeichnet, dass** das Getriebe (10) ferner eine erste Ausgangswelle mit einem Zahnrad darauf umfasst, das ständig mit einem Ritzel kämmt, das auf der Abtriebswelle befestigt ist.

6. Mehrganggetriebe (10) nach einem der Ansprüche 1 bis 5, **dadurch gekennzeichnet, dass** die erste Antriebswelle (13) ein Zahnrad (G3a) umfasst, das mit dem Zahnrad (G3b) auf der Abtriebswelle (15) kämmt, und die zweite Antriebswelle (14) zwei Zahnräder (G12a, G45a) umfasst, die mit entsprechenden Zahnrädern (G12b, G45b) auf der Abtriebswelle (15) kämmen, wobei ein Zahnrad in jeder Zahnradkämmung ständig mit der entsprechenden Welle verbunden ist und ein anderes Zahnrad in der Zahnradkämmung durch die entsprechende zweite, dritte oder vierte Kupplung (C2R, C1L, C1R) mit der entsprechenden Welle in Eingriff gebracht werden kann (Fig. 1, 4, 6, 9, 12, 14, 17).

7. Mehrganggetriebe (10) nach einem der Ansprüche 1 bis 5, **dadurch gekennzeichnet, dass** die erste Antriebswelle (13) ein Zahnrad (G3a) umfasst, das mit dem Zahnrad (G3b) auf der Abtriebswelle (15) kämmt, und die zweite Antriebswelle (14) ein Zahnrad (G12a) umfasst, das mit dem entsprechenden Zahnrad (G12b) auf der Abtriebswelle (15) kämmt, wobei ein Zahnrad in jeder Zahnradkämmung ständig mit der entsprechenden Welle verbunden ist, ein anderes Zahnrad in der Zahnradkämmung durch die entsprechende zweite oder dritte Kupplung (C2R, C1L) mit der entsprechenden Welle in Eingriff gebracht werden kann und die zweite Antriebswelle (14) durch die vierte Kupplung (C1R) direkt mit einer ersten Ausgangswelle (RWD) in Eingriff gebracht werden kann (Fig. 2, 5, 7, 10, 13, 15 und 18).

8. Mehrganggetriebe (10) nach Anspruch 7, **dadurch gekennzeichnet, dass** es ferner eine zweite Ausgangswelle (FWD) umfasst, wobei die erste Ausgangswelle (RWD) mit einer ersten Antriebsachse des Fahrzeugs in Eingriff gebracht werden kann und die zweite Ausgangswelle (RWD) kinematisch mit der Abtriebswelle (15) verbunden ist und mit einer zweiten Antriebsachse des Fahrzeugs in Eingriff gebracht werden kann.

9. Mehrganggetriebe (10) nach einem der Ansprüche 1 bis 8, **dadurch gekennzeichnet, dass** auf der Eingangswelle eine schwingungsdämpfende Einrichtung (29) angeordnet ist.

10. Mehrganggetriebe (10) nach einem der Ansprüche 1 bis 9, **dadurch gekennzeichnet, dass** die erste Kupplung (C3) als Trockenreibungskupplung ausgestaltet ist.

11. Mehrganggetriebe (10) nach einem der Ansprüche 1 bis 9, **dadurch gekennzeichnet, dass** die erste Kupplung (C3) als Nassreibungskupplung ausgestaltet ist.

12. Mehrganggetriebe (10) nach einem der Ansprüche 1 bis 11, **dadurch gekennzeichnet, dass** wenigstens eine der Kupplungen (C1L, C1R, C2L, C2R) eine Klauenkupplung oder ein Klauenkupplungssynchronisierer ist.

13. Mehrganggetriebe (10) nach Anspruch 12, **dadurch gekennzeichnet, dass** die dritte Kupplung (C1L) und die vierte Kupplung (C1R) als Klauenkupplungen ausgestaltet sind und eine gemeinsame Schaltmuffe teilen.

14. Mehrganggetriebe (10) nach einem der Anspruch 12 oder 13, **dadurch gekennzeichnet, dass** die zweite Kupplung (C2L) und die fünfte Kupplung (C2R) als Klauenkupplungen ausgestaltet sind und eine gemeinsame Schaltmuffe teilen.

15. Mehrganggetriebe (10) nach einem der Ansprüche 1 bis 14, **dadurch gekennzeichnet, dass** die Kupplungen (C1L, C1R, C2L, C2R) durch eine einzige elektrisch angetriebene Schalttrommel (30) in Eingriff genommen werden.

16. Mehrganggetriebe (10) nach einem der Ansprüche 1 bis 15, **dadurch gekennzeichnet, dass** es eine Parkbremsvorrichtung (P) umfasst, welche die Abtriebswelle an einem Gehäuse des Getriebes (10) verriegelt.

17. Mehrganggetriebe (10) nach einem der Ansprüche 1 bis 16, **dadurch gekennzeichnet, dass** der Rotor (17a) der elektrischen Maschine (17) über ein Stirnradgetriebe (24) mit dem dritten Glied (23) des Planetengetriebes (20) verbunden ist und die Achse (17a') des Rotors (17a) von der Achse der Eingangswelle (11) entfernt angeordnet ist.

18. Mehrganggetriebe (10) nach einem der Ansprüche 1 bis 16, **dadurch gekennzeichnet, dass** der Rotor (17a) der elektrischen Maschine (17) direkt mit dem dritten Glied (23) des Planetengetriebes (20) verbunden ist und der Rotor (17a) koaxial zur ersten und zur zweiten Abtriebswelle (13, 14) angeordnet ist.

19. Mehrganggetriebe (10) nach einem der Ansprüche 1 bis 18, **dadurch gekennzeichnet, dass** die elektrische Maschine (17) eine Induktionsmaschine mit Käfigläufer, eine Synchron-Permanentmagnetmaschine oder eine Hysteresemaschine ist.

20. Mehrganggetriebe (10) nach einem der Ansprüche 1 bis 19, **dadurch gekennzeichnet, dass** der Rotor (17a) ferner wenigstens einen Kühlkanal (32) zur Flüssigkeitskühlung umfasst.

## Revendications

1. Transmission à plusieurs vitesses (10), notamment destinée à un véhicule comprenant un arbre d'entrée (11), un premier arbre d'entraînement (13), un second arbre d'entraînement (14), un arbre entraîné (15), une machine électrique (17) équipée d'un rotor (17a), un jeu d'engrenages planétaires (20) comportant trois liaisons (21, 22, 23), une première (21) de ces liaisons étant reliés en permanence au premier arbre d'entraînement (13) et pouvant être connectée à l'arbre d'entrée (11) par un premier embrayage commandable (C3), une seconde (22) de ces liaisons étant reliée au second arbre d'entraînement (14) et la troisième liaison (23) étant cinématiquement reliée au rotor (17a) de la machine électrique (17), la transmission (10) comprenant en outre :
un premier engrènement (G1/2) permettant d'enclencher une première vitesse (S1) et une seconde vitesse (S2), un second engrènement (G3) permettant d'enclencher une troisième vitesse (S3), et un troisième engrènement (G4/5) permettant d'enclencher une quatrième vitesse (S4) et une cinquième vitesse (S5),
un second embrayage commandable (C2R) permettant la liaison cinématique du premier arbre d'entraînement (13) et de l'arbre entraîné (15) par le second engrènement (G3), un troisième embrayage commandable (C1L) et un quatrième embrayage commandable (C1R) permettant la liaison cinématique du second arbre d'entraînement (14) et de l'arbre entraîné (15) respectivement par le premier engrènement et le troisième engrènement (G1/2, G4/5) avec différents rapports de démultiplication, et un cinquième embrayage d'arrêt commandable (C2L) permettant une liaison directe entre le premier arbre d'entraînement (13) et le second arbre d'entraînement (14),
le premier rapport de démultiplication i_{G12} entre des roues d'embrayage (G12a, G12b) du premier engrènement (G1/2) venant en prise avec l'une des roues d'engrenage (G12a) située sur le second arbre d'entraînement (14) ayant une valeur définie,
**caractérisée en ce que**
le rapport de vitesses i_{PGS} entre la seconde liaison (22) et la troisième liaison (23) la première liaison (21) étant bloquée (21) a une valeur définie : _{iPGS}<0 ;
le second rapport de démultiplication i_{G3} entre des roues d'engrenage (G3a, G3b) du second engrènement (G3), venant en prise avec l'une des roues d'engrenage (G3a) situées sur le premier arbre d'entraînement (13) satisfait à l'inégalité i_{G3}<i_{G12}/(1-(1/i_{PGS})) ;
le troisième rapport de démultiplication i_{G45} entre des roues d'engrenage (G45a, G45b) du troisième engrènement (G4/5) venant en prise satisfait à l'inégalité i_{G45}<i_{G3}.

2. Transmission à plusieurs vitesses (10) conforme à la revendication 1,
**caractérisée en ce que**
la première vitesse (S1) ayant le rapport de vitesses le plus élevé entre le premier arbre d'entraînement (13) et l'arbre entraîné (15) est obtenue par la mise en prise simultanée du troisième embrayage (C1L) et du cinquième embrayage (C2L),
la seconde vitesse (S2) ayant un rapport de vitesses entre l'arbre d'entraînement (13) et l'arbre entraîné (15) inférieur à celui de la première vitesse (S1) est obtenue par la mise en prise du troisième embrayage (C1L) et le blocage électrique du rotor de la machine électrique (17a),
la troisième vitesse (S3) ayant un second rapport de démultiplication i_{G3} entre le premier arbre d'entraînement (13) et l'arbre entraîné (15) inférieur à celui de la seconde vitesse (S2) est obtenue par la mise en prise du second embrayage (C2R),
la quatrième vitesse (S4) ayant un rapport de vitesses entre le premier arbre d'entraînement (13) et l'arbre entraîné (15) inférieur à celui de la troisième vitesse (S3) est obtenue par la mise en prise simultanée du quatrième embrayage (C1R) et du cinquième embrayage (C2L),
la cinquième vitesse (G5) ayant un rapport de démultiplication entre le premier arbre d'entraînement (13) et l'arbre entraîné (15) inférieur à celui de la quatrième vitesse (S4) est obtenue par la mise en prise du quatrième embrayage (C1R) et le blocage électrique du rotor de la machine électrique (17a).

3. Transmission à plusieurs vitesses (10) conforme à la revendication 1 ou 2,
**caractérisée en ce que**
la première liaison (21) du jeu d'engrenages planétaires (20) est un porte pignons satellites, la seconde liaison (22) est un engrenage annulaire et la troisième liaison (23) est un engrenage solaire.

4. Transmission à plusieurs vitesses (10) conforme à l'une des revendications 1 à 3,
**caractérisée en ce que**
le second arbre d'entraînement (14) est monté à sa partie interne ou travers du premier arbre d'entraînement (13).

5. Transmission à plusieurs vitesses (10) conforme à l'une des revendications 1 à 4,
**caractérisée en ce qu'**
elle comporte en outre un premier arbre de sortie équipé d'un engrenage venant en permanence en prise avec un pignon fixé sur l'arbre entraîné.

6. Transmission à plusieurs vitesses (10) conforme à l'une des revendications 1 à 5,
**caractérisée en ce que**
le premier arbre d'entraînement (13) comporte une roue d'engrenage (G3a), venant en prise avec une roue d'engrenage (G3b) située sur l'arbre entraîné (15) et le second arbre d'entraînement (14) comporte deux roues d'engrenage (G12a, G45a), venant en prise avec des roues d'engrenage correspondantes (G12b, G45b) situées sur l'arbre entraîné (15), l'une des roues d'engrenage de chacune de ces roues d'engrenage venant en prise étant en permanence reliée à l'arbre correspondant tandis que l'autre roue d'engrenage des roues d'engrenage venant en prise pouvant être mise en prise avec l'arbre correspondant par le second, le troisième ou le quatrième engrenage (C2R, C1L, C1R) correspondant (fig. 1, 4, 6, 9, 12, 14, 17).

7. Transmission à plusieurs vitesses (10) conforme à l'une des revendications 1 à 5,
**caractérisée en ce que**
le premier arbre d'entraînement (13) comporte une roue d'engrenage (G3a) venant en prise avec une roue d'engrenage (G3b) située sur l'arbre entraîné (15) et le second arbre d'entraînement (14) comporte une roue d'engrenage (G12a) venant en prise avec une roue d'engrenage (G12b) correspondante située sur l'arbre entraîné (15), une roue d'engrenage de chacune de ces roues d'engrenage venant en prise étant reliée en permanence à l'arbre correspondant, et une autre roue d'engrenage de ces roues d'engrenage venant en prise pouvant être mise en prise avec l'arbre correspondant par le second ou le troisième embrayage correspondant (C2R, C1L), et le second arbre d'entraînement (14) pouvant être mis directement en prise avec le premier arbre de sortie (RWD) par le quatrième embrayage (C1R) (fig. 2, 5, 7, 10, 13, 15 et 18).

8. Transmission à plusieurs vitesses (10) conforme à la revendication 7,
**caractérisée en ce qu'**
elle comporte en outre un second arbre de sortie (FWD), le premier arbre de sortie (RWD) pouvant être mis en prise avec un premier essieu moteur du véhicule et le second arbre de sortie (RWD) étant cinématiquement relié à l'arbre entraîné (15) et pouvant être mis en prise avec un second essieu moteur du véhicule.

9. Transmission à plusieurs vitesses (10) conforme à l'une des revendications 1 à 8,
**caractérisée en ce qu'**
un dispositif d'amortissement des vibrations (29) est monté sur l'arbre d'entrée.

10. Transmission à plusieurs vitesses (10) conforme à l'une des revendications 1 à 9,
**caractérisée en ce que**
le premier embrayage (C3) est réalisé sous la forme d'un embrayage à friction sèche.

11. Transmission à plusieurs vitesses (10) conforme à l'une des revendications 1 à 9,
**caractérisée en ce que**
le premier embrayage (C3) est réalisé sous la forme d'un embrayage à friction humide.

12. Transmission à plusieurs vitesses (10) conforme à l'une des revendications 1 à 11,
**caractérisée en ce qu'**
au moins l'un des embrayages (C1L, C1R, C2L, C2R) est un embrayage à griffes ou un synchroniseur à embrayage à griffes.

13. Transmission à plusieurs vitesses (10) conforme à la revendication 12,
**caractérisée en ce que**
le troisième embrayage (C1L) et le quatrième embrayage (C1R) sont réalisés sous la forme d'embrayages à griffes et comportent un manchon d'enclenchement commun.

14. Transmission à plusieurs vitesses (10) conforme à la revendication 12 ou 13,
**caractérisée en ce que**
le second embrayage (C2L) et le cinquième embrayage (C2R) sont réalisés sous la forme d'embrayages à griffes et comportent un manchon d'enclenchement commun.

15. Transmission à plusieurs vitesses (10) conforme à l'une des revendications 1 à 14,
**caractérisée en ce que**
les embrayages (C1L, C1R, C2L, C2R) sont mis en prise par un seul tambour d'enclenchement (30) à commande électrique.

16. Transmission à plusieurs vitesses (10) conforme à l'une des revendications 1 à 15,
**caractérisée en ce qu'**
elle comporte un dispositif de frein de stationnement (P) bloquant l'arbre entraîné par rapport au carter de la transmission (10).

17. Transmission à plusieurs vitesses (10) conforme à l'une des revendications 1 à 16,
**caractérisée en ce que**
le rotor (17a) de la machine électrique (17) est relié à la troisième liaison (23) du jeu d'engrenages planétaires (20) par l'intermédiaire d'un train d'engrenages à denture droite (24) et l'axe (17a') du rotor (17a) est situé à distance de l'axe (11) de l'arbre d'entrée.

18. Transmission à plusieurs vitesses (10) conforme à l'une des revendications 1 à 16,
**caractérisée en ce que**
le rotor (17a) de la machine électrique (17) est directement relié à la troisième liaison (23) du jeu d'engrenages planétaires (20) et le rotor (17a) est monté coaxialement au premier arbre d'entraînement et au second arbre d'entraînement (13, 14).

19. Transmission à plusieurs vitesses (10) conforme à l'une des revendications 1 à 18,
**caractérisée en ce que**
la machine électrique (17) est une machine à induction ayant un rotor en cage d'écureuil une machine à aimant permanent synchrone ou une machine à hystérésis.

20. Transmission à plusieurs vitesses (10) conforme à l'une des revendications 1 à 19,
**caractérisée en ce que**
le rotor (17a) comporte en outre un canal de refroidissement (32) permettant le refroidissement par un liquide.
